# EUROPÄISCHE PATENTSCHRIFT

(11) **EP 1 228 951 B1**
(45) Veröffentlichungstag und Bekanntmachung des Hinweises auf die Patenterteilung: **23.04.2003**
(21) Anmeldenummer: 01810102.2
(22) Anmeldetag: 01.02.2001
(51) Int. Cl.: B62D 49/08, B62D 51/06, B60G 9/02

(54) **Landwirtschaftliches Gerät**
Agricultural vehicle
Engin agricole

(43) Veröffentlichungstag der Anmeldung: 07.08.2002
(73) Patentinhaber: Aebli Johann-Peter Landmaschinen, 7214 Seewis-Pardisla (CH)
(72) Erfinder: Mouthon, Marc, 7402 Igis (CH); Guldimann, Dominik, 7402 Bonaduz (CH); Gujan, Georg, 7214 Grüsch (CH); Aebli, Johann-Peter, CH-7212 Davos (CH); Bader, Hermann, CH-7260 Davos (CH)
(74) Vertreter: Hasler, Erich, Dr.

(56) Entgegenhaltungen:
- EP-A- 0 960 800
- AT-B- 323 570
- DE-A- 3 045 353
- DE-A- 3 901 757
- DE-A- 4 210 132
- US-A- 3 670 834
- US-A- 3 792 748
- US-A- 4 014 564

## Beschreibung

Die Erfindung betrifft ein landwirtschaftliches Gerät zum Befahren von quer zur Fahrtrichtung geneigtem Gelände. Beispiele eines solchen Geräts sind ein einachsiges Motorgerät als Grundteil eines Bergmähers, eines Bandheuers, einer Seilwinde, etc., oder ein Transporter mit einem Lastenaufbau, eine Motorschubkarre, ein vierrädriger Traktor, sowie ein Lastenanhänger.

Die DE-A-42 10 132 offenbart eine Starrachsenaufhängung. Eine erste Stange ist einerseits an der Starrachse, andererseits an der Karrosserie des Fahrzeugs angelenkt. Eine zweite Stange ist einerseits an der Starrachse und andererseits an der ersten Stange angelenkt. Querkräfte, die über die erste Stange auf die an der Starrachse vorhandenen Räder aufgebracht werden, werden in einer Buchse kompensiert. Die Buchse ist am Anlenkpunkt der ersten Stange an der Starrachse ausgebildet und gewährt dem Anlenkpunkt eine vorbestimmte Flexibilität. Dieselbe Flexibilität ist in einem anderen Ausführungsbeispiel durch einen Zwischenhebel zwischen dem ersten Hebel und der Starachse erreicht. Dadurch kann die Starrachsenaufhängung eine im Wesentlichen vertikale Bewegungsrichtung der Fahrzeugräder beim Springen sicherstellen und ein Abscharren auch bei wankendem Fahrzeug minimiert werden.

Aus der DE-A-30 45 353 ist ein Balkenmäher bekannt, dessen Antriebsmotor um eine Antriebsachse des Mähbalkens verschwenkbar ist. Dadurch kann der Motor in geneigtem Gelände nach der Vertikalen ausgerichtet werden, um eine Kippgefahr zu vermindern.

Aus der US-A-3,670,834 ist ein Traktor bekannt, dessen hoch liegender Fahrersitz um eine tiefliegende Längsachse verschenkbar ist, um die Last des Fahrers der Querneigung des befahrenen Geländes entsprechend zum bergseitigen Rad hin zu verschwenken. Nachteilig an diesem Traktor ist die Tatsache, dass der Schnittpunkt zwischen der Schwerlinie durch den Schwerpunkt des verschwenkten Teils und des Geländes bei zunehmender Quemeigung dennoch deutlich dem talseitigen Rad entgegenwandert. Dies ist auf die Lage der Schwenkachse zurückzuführen, welche zugunsten der Bodenfreiheit hoch liegen muss. Es wird daher lediglich ein geringer Ausgleich der Last erreicht, und somit bleibt die Kippgefahr dennoch relativ gross.

Aus der EP-A-0 960 800 ist ein landwirtschaftliches Motorfahrzeug bekannt, bei dem ein zu verschwenkender Teil mittels Rollen auf einer an einem Fahrgestell angeordneten Schiene verfahren wird. Dadurch wird mit der so verfahrenen Last die Schwerlinie durch den Schwerpunkt des Fahrzeugs bei unterschiedlichen Querneigungen des Fahrzeugs jederzeit praktisch mittig zwischen den Auflagepunkten der Räder gehalten. In einem Ausführungsbeispiel wird mit dem seitlichen Verfahren der Last zudem eine Verschwenkung des Verbrennungsmotors in eine senkrechte Lage bewirkt. Die Verschwenkung wird dabei um eine virtuelle Längsmittelachse ausgeführt, die etwa in der Ebene des Geländes liegt.

Nachteilig an diesem Gerät ist, dass die Verschwenkung und Verschiebung der Last nicht verschmutzungssicher ist. Auch ist die Konstruktion technisch aufwändig und teuer.

Aus der US-A-3,792,748 ist ein dreirädriges Gerät nach dem Oberbegriff des Anspruchs 1 bekannt, das mit einem Kippschutz und einer Mähmaschine ausgerüstet ist. Das Gefährt hat einen Rahmen, an welchem an jeder Seite ein um eine Längsachse verschwenkbarer Radträger angeordnet ist. Jeder Radträger trägt auf einer horizontalen Achse ein Antriebsrad. Ein vom Rahmen getragener Träger für Motor, Fahrersitz und Fahrzeug-Bedienungselemente sowie ein drittes Rad ist um eine mitten zwischen den beiden Radträgern angeordnete Längsmittelachse verschwenkbar. Der Motor und der Fahrersitz sind dadurch über der Schwenkachse angeordnet. Am Rahmen sind hydraulische Zylinder angeordnet, mit denen der Träger entsprechend einer Schräglage des Rahmens in die Senkrechte verschwenkt werden kann. Über Verbindungsstangen werden die Radträger zusammen mit dem Träger verschwenkt, so dass die Räder wie auch Motor und Fahrersitz jeweils in einer senkrechten Position bleiben können, selbst wenn der befahrene Untergrund quer zur Fahrtrichtung geneigt ist. Ventile zum Betätigen der Zylinder sind über Quecksilberschalter gesteuert, so dass die vertikale Lage der vertikal ausrichtbaren Teile automatisch beibehalten wird.

Die Verbindungsstangen, der Träger und die Radträger bilden zusammen ein Hebelparallelogramm, bei dem Träger und Radträger vertikale Hebel bilden, wobei je eine obere und untere Verbindungsstange die drei Hebel gelenkig miteinander verbinden.

Durch die Verschwenkung der Räder wird erreicht, dass die Schwerlinie durch den Motor und den Fahrersitz jederzeit etwa mittig zwischen den Auflagepunkten der Räder den Boden schneidet. Nachteilig daran ist jedoch, dass die Räder der Neigung des Terrains entsprechend in unterschiedlichen Winkeln aufliegen. Je nach Neigung des Untergrundes liegt ein anderer Bereich der Reifenaussenfläche auf. Daher müssen die Reifen einen etwa kreisrunden Querschnitt aufweisen und können praktisch nur punktuell aufliegen. Dies führt zu einer schlechten Haftung zwischen Reifen und Untergrund. Die Verringerung der Kippgefahr ist daher mit einer Vergrösserung der Rutschgefahr erkauft. Eine Erhöhung der Traktion durch Vorsehen von Doppelrädern, z.B. Metallrädern, ist nicht möglich, da die Räder im geneigten Gelände lediglich an deren inneren bzw. äusseren Randkante aufliegen können.

Ausgehend vom Stand der Technik gemäss der US-A-3,792,748 ist daher Aufgabe der Erfindung, eine landwirtschaftliche Maschine zum Befahren von quer zur Fahrtrichtung geneigtem Gelände vorzuschlagen, bei der die Traktion hoch und die Kippgefahr niedrig ist. Eine Verlagerung eines wesentlichen Masseteils soll durch eine verschmutzungsunempfindliche und kostengünstige Mechanik erreicht werden. Diese Aufgabe wird durch die Merkmale des Anspruchs 1 gelöst.

Das landwirtschaftliche Gerät zum Befahren von quer zur Fahrtrichtung geneigtem Gelände weist einen Rahmen, wenigstens zwei auf Drehachsen am Rahmen angeordnete Rädern, und eine Hebelmechanik auf. Mit der Hebelmechanik kann ein für den Schwerpunkt der Maschine entscheidendes Masseteil, z.B. ein Motor und/oder ein Lastenaufbau, einer Schräglage der Maschine entsprechend derart zur Bergseite verschoben werden, dass die Schwerlinie durch den Schwerpunkt des Massenteils in einem Bereich um eine Mittellängslinie zwischen den beiden Rädern das befahrene Gelände schneidet. Bei einer solchen Maschine liegen erfindungsgemäss die Drehachsen der Räder in einer gemeinsamen Ebene. Somit sind sie etwa parallel zu einer Ebene des Geländes ausgerichtet. Dadurch liegen die Räder unabhängig von der Geländeneigung vollflächig auf. Dadurch ist es auch möglich, mit Doppelrädern oder Gitterrädern die Spur zu verbreitern.

Die Hebelmechanik weist einen linken und einen rechten Hebel und eine obere und eine untere, in einer Mittelstellung parallel zum Untergrund angeordnete Querverbindung auf, welche Hebel und Querverbindungen mittels vier parallelen Achsen gelenkig miteinander verbunden sind. Das Masseteil ist dabei lediglich an einer einzigen der beiden Querverbindungen angeordnet.

Die Hebelmechanik kann ein Hebelparallelogramm oder eine trapezförmige Hebelmechanik sein. Wesentlich ist, dass die nicht lenkbaren Radachsen in jeder Schwenklage der Mechanik parallel zu einer Querverbindung stehen und nicht mit den seitlich angeordneten Hebeln verschwenken. Die Richtung der Drehachsen kann in Folge von Federbewegungen der Räder oder aufgrund einer vorgegebenen Neigung der Drehachsen von der Parallelen abweichen.

Weisen die Achsen zwischen denseitlichen, gleichlangen Hebeln und den Querverbindungen an der einen Querverbindung einen kleineren Abstand auf als an der anderen Querverbindung, so verschwenken bei Winkelveränderungen in dieser trapezförmigen Hebelmechanik die Querverbindungen gegeneinander. Ist die kürzere Querverbindung des Trapezes unten und die längere oben und wird eine der Querverbindungen horizontal gehalten, während die andere geneigt wird, so verschenken die Querverbindungen derart, dass die horizontale Querverbindung gegen das angehobene Ende der geneigten Querverbindung verschoben wird. Diese Ausgestaltung der Hebelmechanik hat deshalb den Vorteil, dass ein mit der einen Querverbindung verschwenkendes und schiebendes Masseteil zur Bergseite hin geschoben wird, wenn die sich mit den Rädern neigende Querverbindung geneigt wird und dabei das Masseteil zusammen mit der anderen Querverbindung orthogonal zur Schwerkraft ausgerichtet wird.

Ist die Hebelmechanik jedoch ein Hebelparellelogramm, so muss eine senkrechte Ausrichtung des Masseteils durch Verdrehen des Masseteils um eine an einer der Querverbindungen angeordnete Achse erfolgen. Diese Achse ist zweckmässigerweise eine Längsmittelachse.

Ein Hebelparallelogramm und eine trapezförmige Hebelmechanik können jedoch auch kombiniert sein. Dann ist die andere der Querverbindungen nicht durch den Rahmen gebildet, sondern über eine Hebelmechanik mit dem Rahmen verbunden.

Die Verschwenkung und die Verschiebung des Masseteils gegenüber dem Rahmen ist vorteilhaft derart gewählt, dass ein virtuelles Drehzentrum des Masseteils unterhalb der unteren Querverbindung liegt. Dieses Drehzentrum kann sich bei einer Verschwenkung des Masseteils verschieben.

Vorteilhaft ist eine Steuerung zur automatischen senkrechten Ausrichtung des Masseteils vorgesehen. Eine solche Steuerung ist in der EP-A-0 960 800 beschrieben. Ist ein Hebelparallelogramm vorgesehen, so ist in der Steuerung die Winkellage des Hebelparallelogrammes einer bestimmten Winkellage der Verschwenkung zugeordnet. Es sind unterschiedliche Zuordnungen wählbar.

Vorteilhaft weist das Gerät einen Verbrennungsmotor und wenigstens eine durch den Verbrennungsmotor angetriebene hydraulische Pumpe sowie mit dieser verbundene Hydraulikmotoren an den Antriebsrädern auf. Eine solche Hydraulik erlaubt in einfacher Weise den Antrieb von Antriebsrädern und von Geräten, die gegenüber einem Antriebsblock verschwenkbar sind.

Vorteilhaft sind die Hydraulikmotoren je mit einer separaten hydraulischen Pumpe verbunden, damit eine Ansteuerung der einzelnen Räder durch unterschiedliche Pumpenleistungen erfolgen kann und nicht über verschleissende Ventile erfolgen muss.

Vorteilhaft weisen die wenigstens zwei hydraulische Pumpen eine gemeinsame Antriebsachse auf. Dadurch erübrigt sich ein Verteilgetriebe.

Damit die Lastverteilung beim aufwärts oder abwärts Fahren insbesondere mit einem einachsigen Gerät ausgeglichen werden kann, ist das Masseteil vorteilhaft gegenüber den Drehachsen der Räder in Längsrichtung verschieblich angeordnet. Diese erlaubt einen relativ hohen Schwerpunkt der verschieblichen Masse. Dies ermöglicht, das Masseteil seitlich gegenüber dem Rahmen um einen grösseren Verschwenkwinkel zu verschenken.

Im Folgenden wird die Erfindung anhand von in den Figuren schematisch dargestellten Beispielen erläutert. Es zeigt
- Figur 1:: eine schematische Ansicht von Hinten eines landwirtschaftlichen Transporters mit einer trapezförmigen Hebelmechanik, mit der ein Jauchefass nach der Senkrechten ausgerichtet ist,
- Figur 2:: eine schematische Ansicht von Hinten eines landwirtschaftlichen Transporters mit einem Hebelparallelogramm, mit dem der Schwerpunkt eines Jauchefasses zur Bergseite verschoben ist,
- Figur 3:: eine Frontalansicht eines Bergmähers mit einer trapezförmigen Hebelmechanik, mit der der Antriebsblock senkrecht ausgerichtet ist,
- Figur 4:: eine Frontalansicht eines dem Bergmäher gemäss Fig. 3 ähnlichen Bergmähers, bei welchem der Antriebsblock in einen Rahmen hineingesetzt ist,
- Figur 5:: eine perspektivische Skizze des Bergmähers gemäss Fig. 4,
- Figur 6:: eine perspektivische Skizze eines Bergmähers mit Hebelparallelogramm zur Verschiebung des Motorblockes,
- Figur 7:: eine Ansicht des Bergmähers gemäss Fig. 6 von Hinten,
- Figur 8:: schematisch eine trapezförmige Hebelmechanik, bei der die Last Zug auf die seitlichen Hebel ausübt,
- Fig. 9: schematisch eine Maschine mit einem Hebelparallelogramm, bei dem die Last Zug auf die seitlichen Hebel ausübt,
- Fig. 10: schematisch eine Kombination von trapezförmiger Hebelmechanik mit einem Hebelparallelogramm.

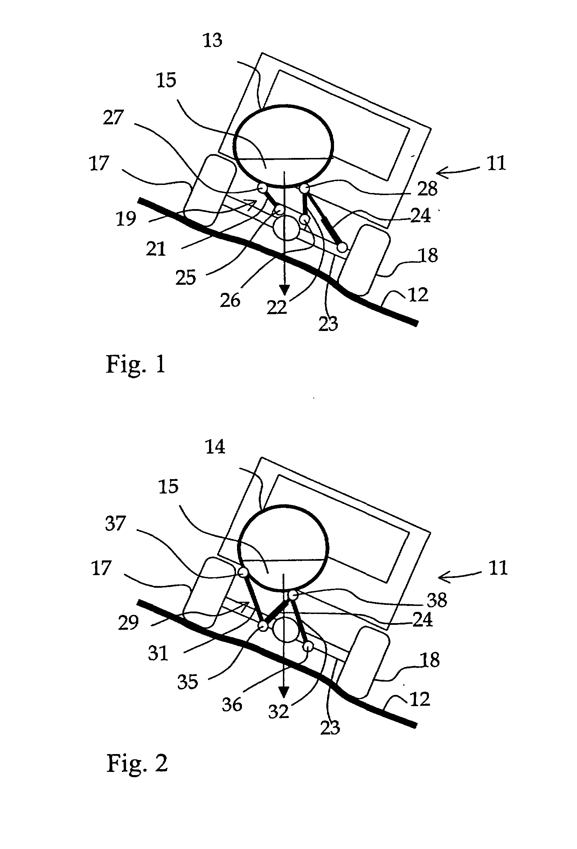

In Figur 1 ist ein geländetauglicher, landwirtschaftlicher Transporter 11 dargestellt, der in geneigtem Gelände 12 quer zur Geländeneigung fährt und dabei ein Jauchefass 13 mitführt. Damit der Schwerpunkt der Jauche 15 im Jauchefass 13 etwa senkrecht über einer Längsmittellinie zwischen den Rädern 17,18 des Transportes 11 liegt, ist das Jauchefass 13 zur Hangseite des Transporters 11 verschwenkt. Zur Verschwenkung sind wenigstens zwei gleiche Hebelmechaniken 19 vorne und hinten am Jauchefass 13 vorgesehen, von denen eine schematisch dargestellt ist.

Die Hebelmechanik 19 weist zwei gleichlange, tragende Hebel 21,22 auf. Jeder dieser Hebel 21,22 ist einerseits mit dem Fahrgestell 23 des Transporters 11 und andererseits mit dem Jauchefass 13 gelenkig verbunden. In einer Mittelstellung liegen die Anlenkstellen 25,26 am Fahrgestell 23 und die Anlenkstellen 27,28 am Jauchefass 13 jeweils symmetrisch zu einer mittelsenkrechten Ebene in Längsrichtung des Transporters 11. Die Anlenkstellen 25, 26 liegen auf einer Parallelen zur Achse der Räder 17,18 und näher zusammen als die Anlenkstellen 27,28 am Jauchefass 13. Diese Anlenkstellen 27,28 können bezüglich des Fahrgestells 13 um die Anlenkstellen 25,26 am Fahrgestell 23 verschwenkt werden. Dabei wird das Jauchefass 13 in Schwenkrichtung verschoben und gleichzeitig gegen das Fahrgestell 23 geneigt.

Durch die Überlagerung der Schwenkbewegungen der beiden Hebel 21,22 wird das Jauchefass 13 um ein stets sich verschiebendes Schwenkzentrum verschwenkt, das unterhalb der Anlenkpunkte 25,26 am Fahrgestell 23 liegt. Dank des tief liegenden Schwenkzentrums schneidet die Schwerlinie durch den Schwerpunkt der Jauche im Jauchefass 13 den befahrenen Untergrund 12 stets in einem Punkt, der nahe der Mittellinie der Fahrspur liegt. Dadurch ist die Gefahr des Kippens des Transporters 11 stark verringert.

In Figur 2 ist ein Transporter 11 mit einem Jauchefass 14 mit kreisrundem Querschnitt dargestellt. Bei Jauchefässern 14 mit kreisrundem Querschnitt ist es für die Gewichtsverteilung unerheblich, ob bei der Verschwenkung der Hebelmechanik zur Bergseite hin das Jauchefass 14 um ein Schwenkzentrum verschenkt oder lediglich zur Bergseite hin verschoben wird. Daher ist in diesem Fall die gleiche Gewichtsverteilung auch mittels eines Hebelparallelogrammes 29 erreichbar. Die zwei parallelen Hebel 31,32 des Hebelparallelogrammes 29 sind am Fahrgestell 23 in den Anlenkstellen 35,36 und am Jauchefass 14 an den Anlenkstellen 37,38 angelenkt. Die Hebelmechanik 19 wie auch das Hebelparallelogramm 29 sind jeweils durch einen hydraulischen Zylinder 24 winkelverstellbar.

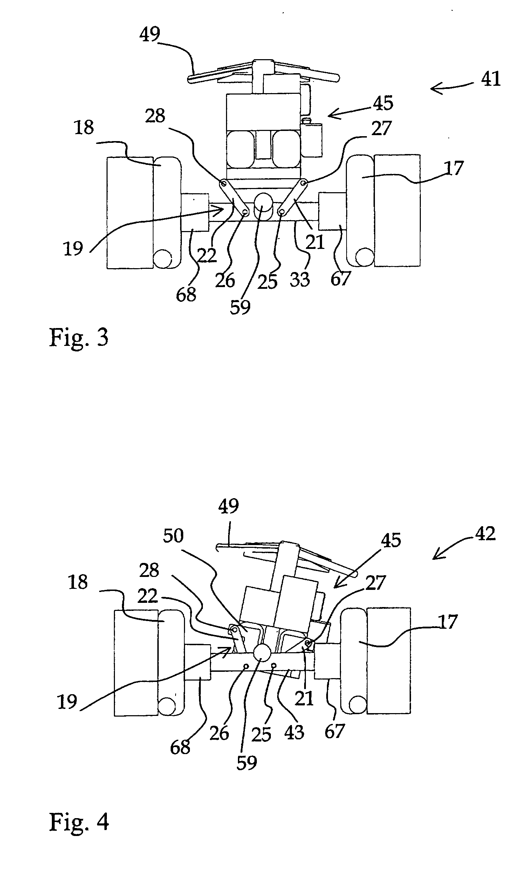

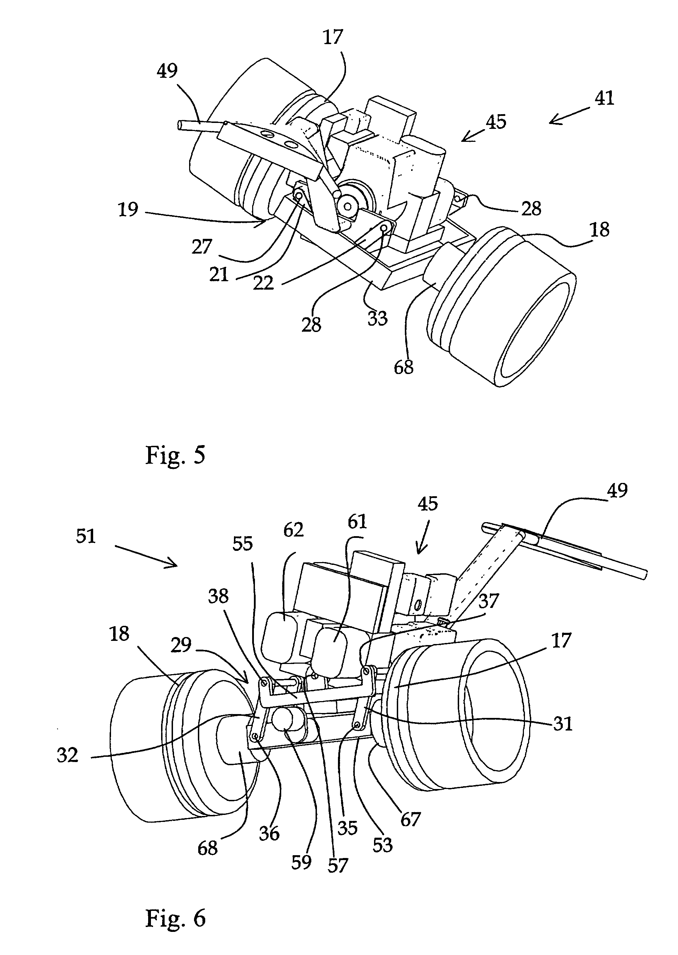

Die Hebelmechanik 19 gemäss Figur 1 ist gemäss Figuren 3, und 5 auf einen einachsigen Bergmäher 41 übertragen. Figur 3 zeigt einen Bergmäher 41 bei welchem ein Antriebsblock 45 mit zwei Hebelmechaniken 19 auf einen Rahmen 33 gesetzt ist. Der Rahmen 33 besteht aus einem fest mit den Radlagern verbundenen, in Richtung der Drehachsen der Räder 17,18 sich erstreckenden Balken. Am Rahmen 33 sind hinten und vorne die seitlichen Hebel 21,22 angelenkt. Diese erstrecken sich von den näher zusammen liegenden Anlenkpunkten 25,26 am Rahmen 33 nach oben zu den weiter auseinander liegenden Anlenkpunkten 27,28 am Antriebsblock 45.

Bei dem in Figuren 4 und 5 dargestellten Bergmäher 42 wird wie beim Bergmäher 41 gemäss Figur 3 mit der Hebelmechanik 19 der Antriebsblock 45 mit Verbrennungsmotor, Getriebe und Hydraulikpumpen gegenüber einem Rahmen 43 verlagert. Am Rahmen 43 sind die Räder 17 und 18 angeordnet. Die Räder 17,18 sind gegenüber dem Rahmen 43 nicht verschwenkbar. Sie werden gemeinsam mit dem Rahmen 43 zusammen gegenüber dem Antriebsblock 45 lageverändert. Die Lageveränderung geschieht um ein stetig veränderliches Verschwenkzentrum, dessen Lage durch die Abstandverhältnisse der Anlenkstellen 25,26,27,28 und die Winkel der Hebelmechanik 19 bestimmt ist. Das Schwenkzentrum liegt unter den unteren Anlenkpunkten 25,26 und über dem befahrenen Boden 12 oder gar etwas darunter.

Zum Unterschied zum Bergmäher 41 ist der Antriebsblock 45 beim Bergmäher 42 tiefer gesetzt als bei diesem. Dazu ist der Rahmen 43 als rechteckiges Geviert ausgeführt, das einen inneren Freiraum aufweist. Der Antriebsblock 45 ist in diesen Freiraum hineingestellt. Dazu sind die Anlenkstellen 27,28 an einem Träger 50 für den Antriebsblock 45 angeordnet. Der Träger 50 seinerseits weist hinten und vorne Ohren auf, die eine tiefer gelegene Stellfläche für den Antriebsblock mit den Anlenkstellen 27,28 verbinden. Dadurch ist der Antriebsblock 45 beim Bergmäher 42 gegenüber dem Antriebsblock 45 beim Bergmäher 41 tiefer gelegt. Dies resultiert in einem niedrigeren Schwerpunkt, was den Bergmäher 42 weniger anfällig macht auf Kippimpulse durch vorstehende Steine. Zudem ist die Handlast für den Geräteführer bei Fahrten in Falllinie des Geländes weniger abhängig von der Neigung des Geländes.

Mittels einer elektronischen Steuerung wird ein nicht dargestelltes Verstellorgan angesteuert, mit dem die Hebelmechanik 19 winkelverstellt werden kann. Die Verstellung erfolgt jeweils soweit, bis der Antriebsblock senkrecht ausgerichtet ist oder, bei nicht ausgleichbarer Querneigung, in eine Endstellung gelangt. Die Lenkstange 49 zum Lenken des Bergmähers 41,42 wird zusammen mit dem Antriebsblock 45 verschwenkt. Der Führer des Bergmähers 41,42 hat daher die Lenkstange 49 immer in horizontaler Ausrichtung vor sich.

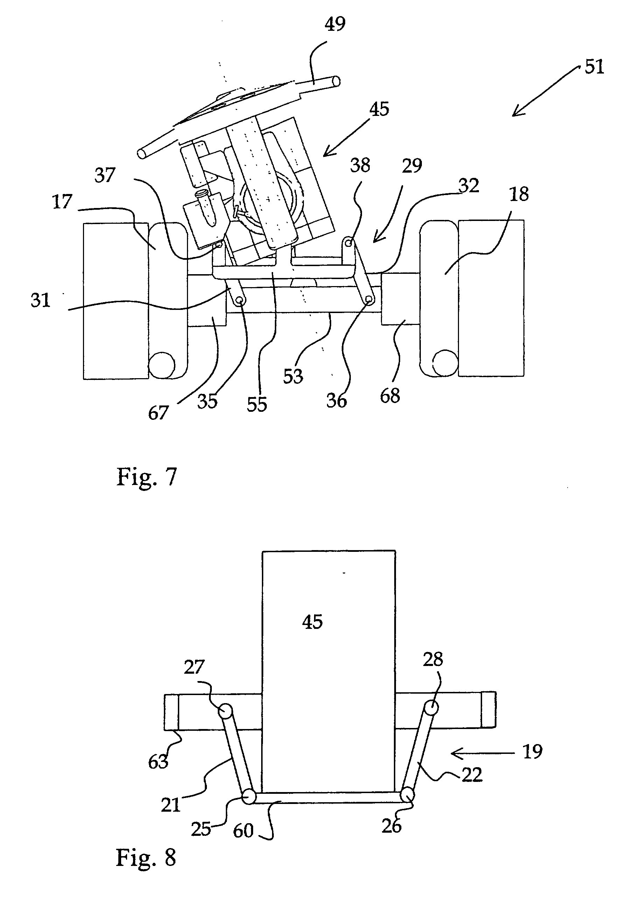

In Figuren 6 und 7 ist ein Bergmäher 51 dargestellt, bei welchem die Schwenkbewegung und die seitliche Verschiebung des Antriebsblocks 45 mechanisch getrennt sind. Die seitliche Verschiebung erfolgt mittels eines Hebelparallelogramms 29. Ein Rahmen 53 bildet eine untere Querverbindung, ein Träger 55 für den Motorblock 45 eine obere Querverbindung. Die seitlichen Hebel 31,32 sind an beiden Querverbindungen 53,55 angelenkt und parallel ausgerichtet. Der Antriebsblock 45 ist am Träger 55 angelenkt. Die Anlenkachse 57 ist mittig längs zur Fahrtrichtung angeordnet. Für die Verschwenkung um die Achse 57 und die Verschiebung sind zwei separat angesteuerte Verstellorgane vorgesehen (nicht dargestellt).

Als Verstellorgane können elektrische oder hydraulische Antriebe vorgesehen sein. Vorgezogen werden hydraulische Zylinder, welche vorzugsweise in zwei Richtungen wirkend ausgebildet sind.

Der Antriebsblock 45 weist einen Verbrennungsmotor und durch diese angetriebene Hydraulikpumpen 61,62 auf. Davon ist eine dynamisch steuerbare Hydraulikpumpe 61 für das linke Antriebsrad 17 und eine zweite solche Hydraulikpumpe 62 für das rechte Antriebsrad 18 vorgesehen. Zudem ist eine von der Motoren-Umdrehungszahl abhängige Zahnrad-Hydraulikpumpe für Geräte vorgesehen. Am Bergmäher 51 ist für den Antrieb der nebeneinander angeordneten Hydraulikpumpen 61,62 ein Verteilgetriebe vorgesehen. Die Hydraulikpumpen können auch auf einer gemeinsamen Achse angeordnet sein, so dass ein Verteilgetriebe hinfällig ist.

In Figur 3,4 und 6 ist jeweils ein Ankupplungsorgan 59 dargestellt, an welches ein Mähbalken, ein Bandheuer, eine Schneeschleuder oder ein anderes Gerät ankoppelbar ist. Diese Geräte werden wie die Antriebsräder 17,18 durch Hydraulikmotoren angetrieben. Die Hydraulikmotoren 67,68 der Antriebsräder sind vorteilhaft innerhalb der Radfelgen angeordnet, um mehr Freiraum zwischen den Antriebsrädern 17,18 frei zu lassen. Dieser Freiraum kann für grössere Verschwenkungswinkel genutzt werden.

In Figur 8 ist eine schematische trapezförmige Hebelmechanik 19 dargestellt. Der einzige Unterschied zwischen der in Figur 4 dargestellten und der in Figur 8 dargestellten Hebelmechanik ist die Gegebenheit, dass bei der Hebelmechanik 19 gemäss Figur 8 die Querverbindung 60, an welcher das Masseteil 45 angeordnet ist, die kürzere Querverbindung bildet, während der Rahmen 63 die längere Querverbindung bildet. Damit die gewünschte Verschiebung und Verschwenkung erreicht wird, muss bei dieser Anordnung ebenfalls die kürzere Querverbindung 60 unten und die längere 63 oben angeordnet sein. Dies hat den Vorteil, dass der relativ sperrige Rahmen 63 weiter oben liegt und daher weniger in Konflikt mit Bodenunebenheiten geraten kann. Zudem kann der Schwerpunkt des Masseteils 45 maximal abgesenkt werden. Da die Hebel 21,22 in dieser Anordnung unter Zug stehen, kann das Masseteil auch bei längeren Standzeiten nicht zur Seite kippen.

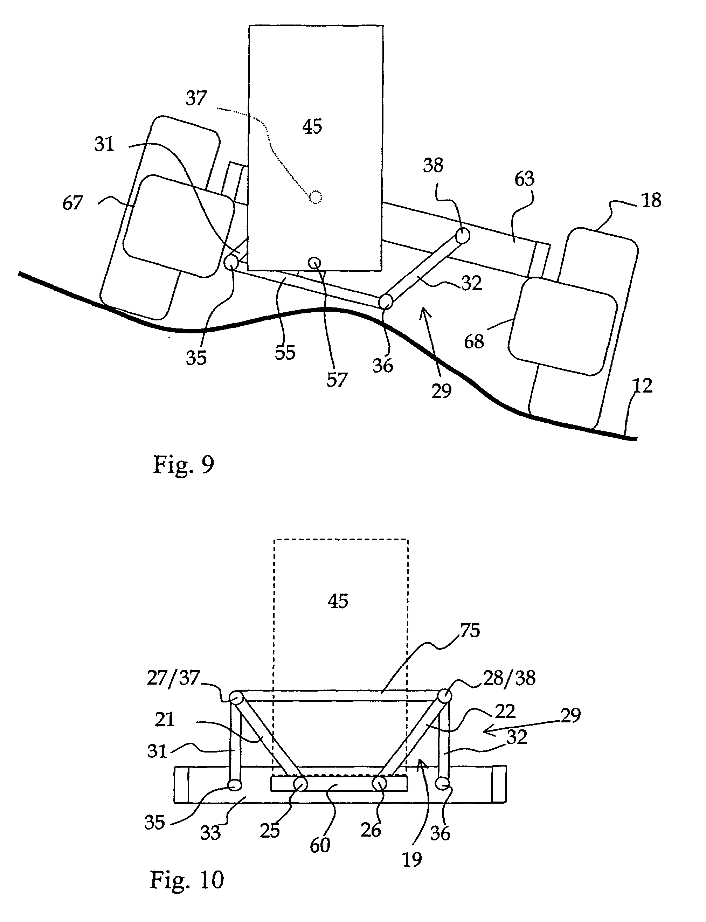

In Figur 9 ist ein Fahrgestell 63 mit einem Hebelparallelogramm 29 dargestellt, an welchem der Masseteil 45 angelenkt ist. Auch in Figur 9 ist zum Unterschied zu Figur 6 und 7 das Masseteil 45 an der unteren Querverbindung 55 angeordnet. Dies bedingt einen Rahmen 63 mit einem vorderseitigen und hinterseitigen Rahmenteil, zwischen welchen Rahmenteilen das Masseteil 45 angeordnet sein kann. Diese Hebelmechanik 29 mit seitlichen Hebeln 31,32, welche auf Zug belastet sind, hat wieder den Vorteil, dass der Schwerpunkt des Masseteils 45 sehr tief gesetzt werden kann. Dabei bildet die erforderliche Bodenfreiheit eine Grenze für das Absenken des Masseteils 45.

In einer letzten Figur ist schliesslich noch dargestellt, dass auch zwei derartige Hebelmechaniken 19,29 kombiniert werden können. Wenigstens eine davon muss eine trapezförmige Gestalt haben, damit zusammen mit einer seitlichen Verschiebung auch eine Verschwenkung erfolgt. Die andere Hebelmechanik kann ein Hebelparallelogramm 29 oder eine zweite trapezförmige Hebelmechanik 19 sein. Der Vorteil kombinierter Hebelmechaniken ist, dass die Bewegung des Masseteils 45 mittels einer Steuerung unterschiedlich ausgeführt werden kann, indem die beiden Hebelmechaniken 19,29 individuell angesteuert werden. Zudem können mit kleineren Winkeländerungen in der einzelnen Hebelmechanik grössere Bewegungen erreicht werden.

Zusammenfassend kann gesagt werden, dass bei einem landwirtschaftlichen Gerät zum Befahren von geneigtem Gelände 12 quer zur Geländeneigung wenigstens eine mit den Rädern 17,18 und einem wesentlichen Masseteil, z.B. einem Motorblock 45 oder einem Lastenaufbau 13,14 verbundene Hebelmechanik 19,29 vorgesehen ist. Eine einzelne Hebelmechanik 19,29 weist eine obere und eine untere Querverbindung 13,14,23,33,43,50,55,60,63,75 auf, an denen jeweils zwei Achsen 25,26; 27,28 bzw. 35,36; 37,38 angeordnet sind. Jeweils an einer oberen und einer unteren Achse ist ein seitlicher Hebel 21,22;31,32 angelenkt. Diese Hebelmechanik 19,29 wird durch ein Verstellorgan derart verstellt, dass das Masseteil jeweils zur Bergseite des geneigten Geländes lageverändert wird. Somit sind das Masseteil (13,14,45) mit der Hebelmechanik 19,29 lageveränderlich am Rahmen und die Drehachsen der Räder 17,18 unabhängig der Lage des Masseteils 13,14,45 in einer gemeinsamen Ebene angeordnet. Diese Ebene ist in der Folge parallel zum Gelände 12 ausgerichtet. Es sind auch zwei Hebelmechaniken kombinierbar. Durch eine trapezförmige ausgebildete Hebelmechanik 19 und/oder eine zusätzliche Drehachse 57 an einer Querverbindung 55, um welche das Masseteil 45 zusätzlich verschwenkbar ist, wird gewährleistet, dass das Masseteil 45 mittels ein oder zwei Verstellorganen jederzeit senkrecht ausgerichtet werden kann.

## Patentansprüche

1. Landwirtschaftliches Gerät (11,41,42,51) zum Befahren von quer zur Fahrtrichtung geneigtem Gelände(12),
- mit wenigstens zwei auf Drehachsen an einem Rahmen (23,33,43,53) angeordneten Rädern (17,18),
- einem für den Schwerpunkt des Geräts (11,41,42,51) wesentlichen und gegenüber dem Rahmen (23,33,43,53) lageveränderlichen Masseteil (13,14,45), und
- einer Hebelmechanik (19,29) zum Lageverändern des Masseteils (13,14,45) entsprechend einer Schräglage des Geräts (11,41,42,51), so dass die Schwerlinie durch den Schwerpunkt des Massenteils (13,14,45) unabhängig von der Schräglage des Geräts (11,41,42,51) in einem Bereich um eine Mittellängslinie zwischen den beiden Rädern (17,18) das befahrene Gelände (12) schneidet,
- bei welcher Hebelmechanik ein linker seitlicher Hebel (21,31) und ein rechter seitlicher Hebel (22,32) mittels vier paralleler Achsen (25,26,27,28;35,36,37,38) eine obere Querverbindung (14,15,45,50,55,63,75) gelenkig mit einer unteren Querverbindung (23,33,43,53,60) verbinden und ein Verstellorgan (24) zum Winkelverstellen der Hebelmechanik vorhanden ist,
**dadurch gekennzeichnet,**
- **dass** beide Räder (17,18) derart am Rahmen (23,33,43,53) angeordnet sind, dass ihre Drehachsen unabhängig der Lage des Masseteils (13,14,45) in einer gemeinsamen zum Gelände (12) parallelen Ebene liegen,
- **dass** eine der Querverbindungen der Hebelmechanik den Rahmen (23,43,53,63) bildet oder mit dem Rahmen (33) verbunden ist,
- **dass** das Masseteil (13,14,45) lediglich an der anderen Querverbindung angeordnet ist, und
- **dass** das Masseteil (13,14,45) mit der Hebelmechanik der Schräglage des Geräts entsprechend gegenüber dem Rahmen (23,33,43,53) durch das Verstellorgan (24) zur Bergseite hin verschiebbar ist.

2. Gerät nach Anspruch 1, **dadurch gekennzeichnet, dass** die Achsen (25,26,27,28) zwischen den seitlichen Hebeln (21,22) und den Querverbindungen an der unteren Querverbindung (23,33,43,60) einen kleineren Abstand aufweisen als an der oberen Querverbindung (13,45,63,75).

3. Gerät nach Anspruch 1, **dadurch gekennzeichnet, dass** die Hebelmechanik ein Hebelparallellogramm (29) ist.

4. Gerät nach Anspruch 3, **dadurch gekennzeichnet, dass** das Masseteil (45) um eine Längsmittelachse (57) verschwenkbar an der Querverbindung (55) angelenkt ist.

5. Gerät nach Anspruch 2 oder 4, **dadurch gekennzeichnet, dass** die Verschwenkung und die Verschiebung des Masseteils (13,14,45) gegenüber dem Rahmen (23,33,43,53,63) derart gewählt ist, dass ein, allenfalls verschiebliches, virtuelles Drehzentrum des Masseteils (45) unterhalb der unteren Querverbindung (23,33,43,53,55,60) liegt.

6. Gerät nach einem der vorangehenden Ansprüche, **gekennzeichnet durch** eine Steuerung und wenigstens einem Verstellorgan (24) zur automatischen senkrechten Ausrichtung des Masseteils (45).

7. Gerät nach einem der vorangehenden Ansprüche, **gekennzeichnet durch** einen Verbrennungsmotor und wenigstens eine **durch** einen Verbrennungsmotor angetriebene hydraulische Pumpe (61,62) sowie mit dieser verbundene Hydraulikmotoren (67,68) zum Antreiben der Rädern (17,18).

8. Gerät nach Anspruch 7, **dadurch gekennzeichnet, dass** die Hydraulikmotoren (67,68) je mit einer separaten hydraulischen Pumpe (61,62) verbunden sind.

9. Gerät nach Anspruch 8, **dadurch gekennzeichnet, dass** die wenigstens zwei hydraulischen Pumpen (61,62) eine gemeinsame Antriebsachse aufweisen.

10. Gerät nach einem der vorangehenden Ansprüche, **dadurch gekennzeichnet, dass** das Masseteil (45) gegenüber den Drehachsen der Räder (17,18) in Längsrichtung verschieblich angeordnet ist.

## Claims

1. Agricultural implement (11, 41, 42, 51) for travelling along terrain (12) inclined at right angles to the direction of travel,
- comprising at least two wheels (17, 18) disposed on axes of rotation on a frame (23, 33, 43, 53),
- a mass part (13, 14, 45), which is essential for the centre of gravity of the implement (11, 41, 42, 51) and variable in position relative to the frame (23, 33, 43, 53), and
- a lever mechanism (19, 29) for varying the position of the mass part (13, 14, 45) in accordance with an inclined position of the implement (11, 41, 42, 51) so that the centroidal axis through the centre of gravity of the mass part (13, 14, 45) independently of the inclined position of the implement (11, 41, 42, 51) cuts the travelled terrain (12) in a region around a centre longitudinal line between the two wheels (17, 18),
- in which lever mechanism a left lateral lever (21, 31) and a right lateral lever (22, 32) by means of four parallel axles (25, 26, 27, 28; 35, 36, 37, 38) connect a top transverse connection (14, 15, 45, 50, 55, 63, 75) in an articulated manner to a bottom transverse connection (23, 33, 43, 53, 60) and an adjusting element (24) is provided for angular adjustment of the lever mechanism,
**characterized in**
- **that** both wheels (17, 18) are disposed on the frame (23, 33, 43, 53) in such a way that their axes of rotation, independently of the position of the mass part (13, 14, 45), lie in a common plane parallel to the terrain (12),
- **that** one of the transverse connections of the lever mechanism forms the frame (23, 43, 53, 63) or is connected to the frame (33),
- **that** the mass part (13, 14, 45) is disposed only on the other transverse connection, and
- **that** the mass part (13, 14, 45) with the lever mechanism is displaceable relative to the frame (23, 33, 43, 53) in the direction of the hillside by the adjusting element (24) in accordance with the inclined position of the implement.

2. Implement according to claim 1, **characterized in that** the axles (25, 26, 27, 28) between the lateral levers (21, 22) and the transverse connections are a smaller distance apart at the bottom transverse connection (23, 33, 43, 60) than at the top transverse connection (13, 45, 63, 75).

3. Implement according to claim 1, **characterized in that** the lever mechanism is a lever parallelogram (29).

4. Implement according to claim 3, **characterized in that** the mass part (45) is coupled to the transverse connection (55) so as to be pivotal about a longitudinal central axle (57).

5. Implement according to claim 2 or 4, **characterized in that** the pivoting and displacement of the mass part (13, 14, 45) relative to the frame (23, 33, 43, 53, 63) is selected in such a way that an, if need be displaceable, virtual turning centre of the mass part (45) lies below the bottom transverse connection (23, 33, 43, 53, 55, 60).

6. Implement according to one of the preceding claims, **characterized by** a control unit and at least one adjusting member (24) for automatic vertical alignment of the mass part (45).

7. Implement according to one of the preceding claims, **characterized by** an internal combustion engine and at least one hydraulic pump (61, 62), which is driven by an internal combustion engine, as well as hydraulic motors (67, 68) connected to said pump for driving the wheels (17, 18).

8. Implement according to claim 7, **characterized in that** the hydraulic motors (67, 68) are each connected to a separate hydraulic pump (61, 62).

9. Implement according to claim 8, **characterized in that** the at least two hydraulic pumps (61, 62) have a common driving axle.

10. Implement according to one of the preceding claims, **characterized in that** the mass part (45) is disposed so as to be displaceable in longitudinal direction relative to the axes of rotation of the wheels (17, 18).

## Revendications

1. Engin agricole (11, 41, 42, 51) destiné à circuler sur un terrain (12) incliné obliquement ou transversalement par rapport à la direction de déplacement de l'engin, du type comportant :
- au moins deux roues (17, 18) montées sur un bâti (23, 33, 43, 53) sur des axes de rotation,
- un élément pondéral (13, 14, 45) destiné essentiellement à l'équilibrage du centre de gravité de l'engin (11, 41, 42, 51) et mobile en position par rapport au châssis (23, 33, 43, 53),
- un système de leviers (19, 29) destiné à provoquer le déplacement de la position de l'élément pondéral (13, 14, 45) d'une façon correspondant à une position oblique de l'engin (11, 41, 42, 51), de manière telle que la verticale passant par le centre de gravité de l'élément pondéral (13, 14, 45) rencontre le terrain parcouru (12) dans une région située autour de la ligne médiane longitudinale entre les deux roues (17, 18), indépendamment de la position inclinée de l'engin (11, 44, 42, 51),
- système de leviers dans lequel un levier latéral gauche (21, 31) et un levier latéral droit (22, 32) relient par embiellage quatre axes parallèles (25, 26, 27, 28, 35, 36, 37, 38) avec une liaison transversale supérieure (14,15, 45, 50, 55, 63, 75) et avec une liaison transversale inférieure (23, 33, 43, 53, 60) et un organe de réglage (24) étant prévu pour le réglage angulaire du système de leviers,
**caractérisé en ce que**
- les deux roues (17, 18) sont disposées sur le bâti (23, 33, 43, 53) de manière telle que leurs axes de rotation soient situés dans un plan commun parallèle au terrain (12), indépendamment de la position de l'élément pondéral (13, 14, 45),
- **en ce que** l'une des liaisons transversales du système de leviers constitue le bâti (23, 43, 53, 63) ou est reliée au bâti (33),
- **en ce que** l'élément pondéral (13, 14, 45) est situé uniquement sur l'autre liaison transversale et
- **en ce que** l'élément pondéral (13, 14, 45) peut être déplacé par l'organe de réglage (24) vers le côté ascendant du terrain par rapport au bâti (23, 33, 43, 53), avec le système de leviers correspondant à la position inclinée de l'engin.

2. Engin selon la revendication 1, **caractérisé en ce que** les axes (25, 26, 27, 28) présentent entre les leviers latéraux (21, 22) et les liaisons transversales une distance plus petite du côté de la liaison transversale inférieure (23, 33, 43, 60) que du côté de la liaison transversale supérieure (13, 45, 63, 75).

3. Engin selon la revendication 1, **caractérisé en ce que** le système de leviers est un parallélogramme de leviers.

4. Enfin selon la revendication 3, **caractérisé en ce que** l'élément pondéral (45) est embiellé basculable autour d'un axe médian longitudinal (55) sur la liaison transversale (55).

5. Engin selon la revendication 2 ou 4, **caractérisé en ce que** le basculement et le coulissement de l'élément pondéral (13, 14, 45) par rapport au bâti (23, 33, 43, 53, 63) sont choisis de manière telle que dans tous les cas, le centre de rotation virtuel déplaçable de l'élément pondéral (45) soit situé au-dessous de la liaison transversale inférieure (23, 33, 43, 53, 55, 60).

6. Engin selon l'une quelconque des revendications précédentes, **caractérisé par** une commande et au moins un organe de réglage (24) pour le décentrage vertical de l'élément pondéral (45).

7. Engin selon l'une quelconque des revendications précédentes, **caractérisé par** un moteur à combustion et au moins une pompe hydraulique entraînée par un moteur à combustion (61, 62) ainsi que des moteurs hydrauliques reliés à celle-ci (67, 68) pour l'entraînement des roues (17, 18).

8. Engin selon la revendication 7, **caractérisé en ce que** les moteurs hydrauliques (67, 68) sont reliés chacun à une pompe hydraulique séparée (61, 62).

9. Engin selon la revendication 8, **caractérisé en ce que** les pompes hydrauliques (62), au nombre d'au moins deux, présentent un axe d'entraînement commun.

10. Engin selon l'une quelconque des revendications précédentes, **caractérisé en ce que** l'élément pondéral (45) est monté coulissant en direction longitudinale par rapport aux axes de rotation des roues (17, 18).
